# EUROPEAN PATENT SPECIFICATION

(11) **EP 3 130 817 B1**
(45) Date of publication and mention of the grant of the patent: **24.02.2021**
(21) Application number: 16181813.3
(22) Date of filing: 29.07.2016
(51) Int. Cl.: F16D 69/02

(54) **BRAKE BLOCK AND METHOD FOR PRODUCING THE SAME, AND WHEEL TREAD BRAKE DEVICE FOR RAILWAY VEHICLES**
BREMSKLOTZ UND VERFAHREN ZUR HERSTELLUNG DAVON UND LAUFFLÄCHENBREMSVORRICHTUNG FÜR SCHIENENFAHRZEUGE
BLOC DE FREIN ET SON PROCÉDÉ DE PRODUCTION ET DISPOSITIF DE FREIN DE BANDE DE ROULEMENT DE ROUE POUR VÉHICULES FERROVIAIRES

(30) Priority: 31.07.2015 JP 2015152308
(43) Date of publication of application: 15.02.2017
(73) Proprietor: AKEBONO BRAKE INDUSTRY CO., LTD., Tokyo 103-8534 (JP)
(72) Inventor: KAWAKAMI, Tota, Chuo-ku, Tokyo 103-8534 (JP); TAKAHASHI, Hideaki, Chuo-ku, Tokyo 103-8534 (JP)
(74) Representative: Grünecker Patent- und Rechtsanwälte PartG mbB

(56) References cited:
- CN-A- 102 250 583
- CN-B- 101 555 919
- CN-B- 102 635 653
- CN-B- 103 059 806

## Description

### TECHNICAL FIELD

The present invention relates to a brake block and a method for producing the same, and particularly, the present invention relates to a brake block to be suitably used for a wheel tread brake device for railway vehicles and a method for producing the same.

### BACKGROUND ART

As a braking device in a railway vehicle, there is a wheel tread brake device of bringing a friction material into press contact with a wheel tread to generate a friction force and utilizing the friction force as a braking force. This wheel tread brake device includes a brake block including a back plate formed in an arc shape and a friction material to be stuck onto a main surface on the wheel side in this back plate, and by bringing the friction material into press contact with the wheel tread, a braking force is obtained.

Examples of properties required for the friction material include a high friction coefficient (brake output), heat resistance, wear resistance (long life), low counterpart material attack, low noise and the like. In order to satisfy such required properties, a variety of technologies have been proposed. For example, as the friction material to be used for brake blocks, for the purposes of maintaining a stable friction coefficient and suppressing the occurrence of fade or build-up, a friction material containing a bio-soluble fiber as a fiber base material has been proposed (see, for example, Patent Document 1). In addition, as a friction material to be used for brakes of vehicles or the like, a friction material containing a titanate compound and a cerium oxide having an average particle diameter of 1 µm or less in order to achieve both a high friction coefficient and abrasion resistance compatible has been proposed (see, for example, Patent Document 2).

In general, as a friction material in the brake block of brake device, there are three kinds of a cast iron-based friction material, a synthetic resin-based friction material, and a sintered alloy-based friction material. Above all, a brake block including a cast iron-based friction material (cast iron brake block) is broadly used for railway vehicles because it is low in production costs and roughens the wheel tread, so that a friction coefficient between a wheel and a rail can be properly kept. In particular, in railway vehicles, streetcars and the like that are used in a snowfall area or a mountainous region, cast iron brake blocks are frequently used because they are hardly affected by rain or snow.

### CITATION LIST

### PATENT DOCUMENTS

Patent Document 1: JP-A-2011-16877
Patent Document 2: JP-A-2013-112712

### SUMMARY OF INVENTION

### TECHNICAL PROBLEM

The cast iron brake block has the above-described advantages, but problems such as large wheel rolling noise, large brake noise and heavy weight are involved. Then, a friction material capable of solving the foregoing problems while maintaining or improving the various properties required for cast iron brake blocks, which becomes a replacement for the cast iron-based friction material, is demanded.

An object of the present invention is to provide a brake block including a friction material, the brake block being capable of becoming a replacement for a cast iron brake block while maintaining or improving various properties required for the brake block. Specifically, an object of the present invention is to provide a brake block including a friction material whose friction coefficient is decreased to the same level as in a cast iron-based friction material while ensuring braking properties under dry and wet conditions and a method for producing the same.

### SOLUTION TO PROBLEM

The present inventors made extensive and intensive investigations. As a result, it has been found that the foregoing problems can be solved by a brake block (composite brake block) including a synthetic resin-based friction material, wherein a scale-like graphite and a granular graphite are used in combination in the friction material, and a total blending amount of these graphite components is controlled to a specified proportion, leading to accomplishment of the present invention.

That is, the present invention provides the following (1) to (6).
(1) A brake block comprising a friction material including a scale-like graphite and a granular graphite in an amount of 20 to 30% by volume in total.
(2) The brake block according to (1), wherein a volume ratio of the scale-like graphite and the granular graphite (scale-like graphite : granular graphite) is 1:2 to 5:1.
(3) The brake block according to (1) or (2), wherein the friction material includes at least one of a cashew dust and a rubber dust in an amount of 4 to 12% by volume.
(4) The brake block according to any one of (1) to (3), wherein the brake block is a brake block for a railway vehicle.
(5) A method for producing the brake block according to any one of (1) to (4), the method comprising:
   a preforming step of subjecting a frictional material composition including a scale-like graphite and a granular graphite in an amount of 20 to 30% by volume in total to pressure forming, thereby obtaining a preformed body, and
   a heat compression forming step of putting the preformed body into a thermoforming mold, and overlaying a back plate thereon, followed by performing heat compression forming, thereby obtaining a brake block having a desired shape.
(6) A wheel tread brake device for a railway vehicle, comprising the brake block according to any one of (1) to (4).

### ADVANTAGEOUS EFFECTS OF INVENTION

In accordance with the brake block of the present invention, not only a friction coefficient is decreased by the addition of the scale-like graphite to the friction material, but also a braking performance is ensured by the addition of the granular graphite, so that it becomes possible to thoroughly control the braking.

In general, since a synthetic resin-based frictional material has a high friction coefficient, when this is used directly as a replacement for a cast iron brake block, there is a concern that skid is occurred between a rail and a wheel at the time of braking because of an excessively strong braking force, so that it may become difficult to control the braking. In addition, in comparison with the case of using a conventional cast iron brake block, when the output of brake actuation is different, in order to stop a railway vehicle at the same braking distance, a high-level technique is likely required for brake operation by a train driver. However, as described above, according to the brake block of the present invention, since a low friction coefficient can be realized, even if it is used as a replacement for the conventional cast iron brake block, it is possible to enable the train driver to drive a railway vehicle without reacquiring the operation technique.

In consequence, according to the present invention, it is possible to provide a brake block including a synthetic resin-based friction material whose friction coefficient is decreased to the same level as in a cast iron-based friction material while ensuring braking properties under dry or wet conditions, and a method for producing the same. In addition, the brake block of the present invention not only solves the problems involved in a cast iron-based friction material, such as large wheel rolling noise, large brake noise and heavy weight, but also exhibits a braking force substantially identical with that in a brake block including a cast iron-based friction material, and therefore, it may become a satisfactory replacement for a conventional brake block including a cast iron-based friction material without need of a requirement for a train driver to have a high-level technique in a brake operation.

### BRIEF DESCRIPTION OF DRAWING

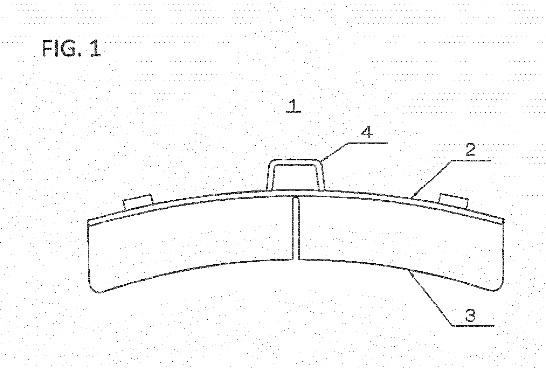

FIG. 1 is a front view of an embodiment of a brake block of the present invention.

### DESCRIPTION OF EMBODIMENTS

Embodiments of the present invention are hereunder described in detail by reference to the accompanying drawing.

FIG. 1 is a front view of an embodiment of a brake she of the present invention. A brake block 1 is basically constituted of a back plate 2, a friction material 3, and a mounting plate 4. The back plate 2 is an approximately rectangular flat plate formed in an arc shape along an arc of a wheel in a railway vehicle, and the friction material 3 is stuck onto a main surface on the wheel side thereof. The mounting plate 4 is loosely fitted to a non-illustrated brake block head on the wheel side and takes on the responsibility of acting as a torque receiving part of receiving a torque generated during braking. Such brake block 1 constitutes a wheel tread brake device in a braking device in a railway vehicle, and during braking, it brings the friction material 3 into press contact with the wheel tread to generate a friction force, thereby stopping or decelerating the vehicle while utilizing the friction force as a braking force.

The friction material in the brake block of the present invention is a synthetic resin-based friction material and contains a fiber base material, a friction adjusting material, and a binder. In the present invention, the scale-like graphite and the granular graphite are included in an amount of 20 to 30% by volume in total as the friction adjusting material in the friction material.

As the graphite, in addition to the scale-like graphite and the granular graphite, examples thereof include amorphous graphite, expanded graphite, and the like; however, in the present invention, from the viewpoints of realizing a low friction coefficient and ensuring braking properties in the synthetic resin-based friction material, the scale-like graphite and the granular graphite are mixed and used in order to obtain a desired friction coefficient.

The scale-like graphite has a particle diameter of preferably 1 to 200 µm, and more preferably 20 to 60 µm. By using the scale-like graphite having a particle diameter falling within the foregoing range, it is possible to enhance lubricity against the sliding surface of the counterpart material, such as a wheel tread of a railway vehicle, etc., and to decrease the friction coefficient.

The granular graphite has a particle diameter of preferably 100 to 1,100 µm, and more preferably 400 to 800 µm. By using the granular graphite having a particle diameter falling within the foregoing range, it is possible to enhance formability and crack resistance.

In the description of the present application, the particle diameter can be determined from a particle size distribution measured by a laser diffraction-type particle diameter measuring device (for example, "LS 13 320" (trade name), manufactured by Beckman Coulter, Inc.).

The scale-like graphite and the granular graphite are included in an amount of 20 to 30% by volume in total in the friction material. When the total amount of the scale-like graphite and the granular graphite is 20% by volume or more, the friction coefficient of the friction material may be decreased to the same level as in a cast iron-based friction material while keeping a balance of the friction coefficient of the friction material between in a dry mode and in a wet mode well. In addition, when the total amount of the scale-like graphite and the granular graphite is 30% by volume or less, the crack resistance and cleanability of the sliding surface of the counterpart material may be thoroughly kept while keeping a balance of the friction coefficient of the friction material between in a dry mode and in a wet mode well. The total amount of the scale-like graphite and the granular graphite is preferably 22 to 28% by volume.

In the present invention, a volume ratio of the scale-like graphite and the granular graphite (scale-like graphite : granular graphite) is preferably 1:2 to 5:1. So long as this volume ratio falls within the foregoing range, the friction coefficient of the friction material may be decreased to the same level as in a cast iron-based friction material while keeping a balance of the friction coefficient of the friction material between in a dry mode and in a wet mode well. In addition, the effect regarding cleanability of the sliding surface of the counterpart material may be much more increased. The volume ratio of the scale-like graphite and the granular graphite (scale-like graphite : granular graphite) is more preferably 3:1 to 5:1, and still more preferably 3:1 to 4:1. When the volume ratio falls within this preferred range, the crack resistance may be more increased.

It is preferred that the friction material in the brake block of the present invention includes at least one organic filler of a cashew dust and a rubber dust as the friction adjusting material. When at least one of the cashew dust and the rubber dust is contained in the friction material, it is possible to ensure the friction coefficient under a light load in dry conditions.

As the cashew dust, examples thereof include a cashew dust obtained by carbonizing an oil content obtained from cashew nut shells and hardening it. A particle diameter of the cashew dust is preferably 10 to 500 µm, and more preferably 100 to 300 µm.

As the rubber dust, examples thereof include a rubber dust obtained by pulverizing rubber for tire (for example, rubber for tread). A particle diameter of the rubber dust is preferably 10 to 1,500 µm, and more preferably 300 to 600 µm.

A content of the organic filler is preferably 4 to 12% by volume, and more preferably 6 to 12% by volume in the friction material.

So long as the addition amount of the organic filler falls within the foregoing range, an adhesion frictional force is increased, the friction coefficient under a light load in dry conditions may be ensured, and for example, the braking properties at the time of stopping of a vehicle may be increased. In addition, the effects regarding the crack resistance and the cleanability of the sliding surface of the counterpart material may be much more increased.

Examples of other friction adjusting materials include inorganic filler, such as barium sulfate, calcium pyrophosphate, calcium carbonate, calcium hydroxide, vermiculite, mica, platy potassium titanate, scale-like lithium potassium titanate or magnesium potassium titanate and amorphous potassium titanate; abrasives such as silicon carbide, alumina, silica, magnesia, chromite, triiron tetroxide, zirconium oxide and zirconium silicate; lubricating materials such as molybdenum disulfide, tin sulfide, zinc sulfide and iron sulfide; powders of a metal such as zinc, tin, copper, iron and aluminum; solid lubricating materials such as graphites other than the scale-like graphite and granular graphite; and the like. These materials may be used either alone or as a combination of two or more thereof. A total content of the other friction adjusting materials may be properly adjusted depending upon desired friction properties. The content of the other friction adjusting materials is controlled to preferably 20 to 61% by volume, and more preferably 26 to 52% by volume in the friction material depending upon the desired friction coefficient.

The fiber base material is used for reinforcement when formed into the friction material, and as the fiber base material, for example, a heat-resistant organic fiber, an inorganic fiber, or a metal fiber is used. Examples of the heat-resistant organic fiber include an aromatic polyamide fiber (aramid fiber) and a flame-resistant acrylic fiber; examples of the inorganic fiber include a potassium titanate fiber, a ceramic fiber (a bio-soluble fiber is preferably used), a glass fiber, a carbon fiber, rock wool, and the like; and examples of the metal fiber include a steel fiber and the like. These fibers may be used either alone or as a combination of two or more thereof. In order to ensure a thorough mechanical strength, a content of the fiber base material is controlled to preferably 1 to 10% by volume, and more preferably 2 to 8% by volume in the friction material.

A binder may be formed of a thermosetting resin, and examples of the thermosetting resin include a phenol resin; an epoxy resin; a resin obtained by modifying such a thermosetting resin with a cashew oil, a silicone oil, various kinds of elastomers, etc.; a resin obtained by dispersing various kinds of elastomers, a fluorine polymer, etc. in such a thermosetting resin; and the like. These may be used either alone or as a combination of two or more thereof. In order to ensure thorough mechanical strength and wear resistance as the brake block, a content of the binder is controlled to preferably 14 to 28% by volume, and more preferably 18 to 26% by volume in the friction material.

The brake block of the present invention may be produced by a conventional production method. For example, the brake block may be produced by a production method including a preforming step of a frictional material composition that forms a frictional material and a heat compression forming step of a preformed body obtained in the preforming step. The respective steps are specifically described below.

First, in the preforming step, raw materials that form a frictional material are uniformly mixed, and the resulting friction material composition is subjected to pressure forming to thereby obtain a preformed body. The friction material composition includes the scale-like graphite and the granular graphite in an amount of 22 to 30% by volume in total and may include, in addition to the graphites, the organic filler, the other friction adjusting materials, the fiber base material, and the binder as described above, and the like.

The frictional material composition is put into a die, and for the purposes of enhancing mixing properties and enhancing workability in the heat compression forming step, it is preferred to subject the frictional material composition to pressure forming under conditions of 6 to 14 MPa. When the pressure is less than 6 MPa, there is a concern that it becomes difficult to perform the formation of a preformed body, whereas when it is more than 14 MPa, the preformed body likely gets cracked, and hence, such is not preferred,

In the heat compression forming step, the preformed body obtained in the preforming step is put into a thermoforming mold, and a back plate is overlaid thereon, followed by performing heat compression forming to thereby obtain a brake block having a desired shape.

As for conditions of the heat compression, it is preferred to perform the heat compression at a temperature of 140 to 155°C and at 10 to 20 MPa for about 20 to 60 minutes.

The brake block of the present invention has a low friction coefficient under high-load conditions, and specifically, the friction coefficient in a dry state under conditions at 120 km/h under a load of 60 kN may be 0.07 to 0.13. So long as the friction coefficient under high-load conditions falls within the foregoing range, the brake block at the same level as a brake block including a cast iron-based friction material and having excellent braking properties may be provided.

In view of the fact that the brake block of the present invention includes a friction material whose friction coefficient is decreased to the same level as in a cast iron-based friction material while ensuring braking properties under dry or wet conditions, it is especially useful as a wheel tread brake device for railway vehicles.

### EXAMPLES

The present invention is hereunder described in more detail by reference to Examples and Comparative Examples, but it should not be construed that the present invention is limited to these Examples.

Tests which were performed in each of the Examples are as follows.

### (1) Friction coefficient in a dry mode (under light load conditions)

- Counterpart material wheel: Forged steel (Q3S)
- Initial speed of braking: 30 km/hr, 60 km/hr, 100 km/hr, 120 km/hr
- Pressing force: 12 kN, 16 kN, 20 kN
- Counterpart material mass: 2.5 tons

The test of each of the above-described pressing forces was performed at each of the above-described initial speeds under the above-described conditions by using a dynamometer test machine, and a low-load friction coefficient in a dry mode against the counterpart wheel was measured.

The case where the low-load friction coefficient µ is in the range of (0.20 ≤ µ ≤ 0.30) was evaluated as "A", and the case where the low-load friction coefficient µ falls outside the foregoing range was evaluated as "B".

### (2) Friction coefficient in a wet mode

- Counterpart material wheel: Forged steel (Q3S)
- Initial speed of braking: 30 km/hr, 60 km/hr, 100 km/hr, 120 km/hr
- Pressing force: 12 kN, 16 kN, 20 kN
- Counterpart material mass: 2.5 tons
- Watering amount: 14 L/hr

Subsequent to the measurement of the above-described "(1) Friction coefficient in a dry mode (under light load conditions)", a friction coefficient in a wet mode was measured in the same manner under the above-described conditions.

In addition, a rate of change in friction coefficient relative to the low-load friction coefficient in a dry mode was determined in accordance with the following formula.

Rate of change in friction coefficient (%) = [{(Friction coefficient in a wet mode)/(Low-load friction coefficient in a dry mode)} -1] × 100

So long as the rate of change in friction coefficient falls within the range of ±30%, it could be judged that the braking properties under dry and wet conditions are ensured. The case of (-30 ≤ (rate of change in friction coefficient) ≤ 30) was evaluated as "A", and the case where the rate of change in friction coefficient falls outside the foregoing range was evaluated as "B".

### (3) Friction coefficient in a dry mode (under high load conditions)

- Counterpart material wheel: Forged steel (Q3S)
- Initial speed of braking: 30 km/hr, 60 km/hr, 100 km/hr, 120 km/hr
- Pressing force: 20 kN, 60 kN
- Counterpart material mass: 11.25 tons

Subsequent to the measurement of the above-described "(2) Friction coefficient in a wet mode", a high-load friction coefficient in a dry mode was measured in the same manner under the above-described conditions by using a dynamometer test machine.

The case where the high-load friction coefficient µ is in the range of (0.07 ≤ µ ≤ 0.13) was evaluated as "A", and the case where the high-load friction coefficient µ falls outside the foregoing range was evaluated as "B".

### (4) Cleanability of sliding surface of counterpart material wheel

After the above-described tests (1) to (3), the state of the sliding surface of the counterpart material wheel was visually confirmed and evaluated in accordance with the following evaluation criteria.
A: Good (A uniform transfer surface was formed.)
B: Bad (A nonuniform transfer surface was formed.)

### <Blending materials of friction material>

Materials used for preparing a friction material of each of the Examples are as follows.
Binder resin: Phenol resin
Rubber dust: Average particle diameter = 500 µm
Cashew dust: Average particle diameter = 200 µm
Scale-like graphite: Average particle diameter = 40 µm
Granular graphite: Average particle diameter = 600 µm

### (Example 1)

Blending materials of a friction material in accordance with a blending formulation (% by volume) as shown in Table 1 were put into a mixer and mixed for 210 seconds by the mixer. A mixed friction material composition was preformed under a pressure of 7 MPa for 15 seconds, thereby preparing a preformed body. Subsequently, the preformed body was put into a thermoforming mold at 145°C, and a back plate was overlaid thereon, followed by performing heat compression forming under a pressure of 15.0 MPa for 27 minutes. Thereafter, this heat compression formed body was subjected to grooving machining, thereby preparing a brake block.

The resulting brake block was subjected to the above-described tests (1) to (4). The results are shown in Table 1.

After the above-described tests (I) to (3), as for confirmation of the crack resistance, the presence or absence of a chip or crack of the friction material was visually confirmed. As a result, the occurrence of any of a chip or a crack was not confirmed.

### (Examples 2 to 7 and Comparative Examples 1 to 2)

Friction materials were prepared in the same manner as in Example 1, except that the blending materials and blending amounts of the friction material were changed to those as shown in Table 1.

The resulting friction materials were subjected to the above-described tests (1) to (4). The results are shown in Table 1.

After the above-described tests (1) to (3), as for confirmation of the crack resistance, the presence or absence of a chip or crack of the friction material was visually confirmed. As a result, in Examples 2 to 5, the occurrence of any of a chip or a crack was not confirmed; and in Examples 6 and 7, though the occurrence of a chip or a crack was slightly confirmed, it was a level at which there was no problem for practical use. On the other hand, in Comparative Examples 1 and 2, the occurrence of a large number of chips or cracks was confirmed, so that it was not suitable for practical use.

### (Reference Example 1)

As for Reference Example 1, a cast iron brake block was prepared.

Alloy cast iron is an alloy including iron (Fe). A composition of the cast iron was adjusted in such a range that the content of carbon (C) was 2.5 to 4.0% by mass; the content of silicon (Si) was 1.0 to 3.0% by mass; the content of manganese (Mn) was 0.01 to 2.2% by mass; the content of phosphorus (P) was 0.01 to 2.5% by mass; and the content of sulfur (S) was 0.0001 to 1 .0% by mass, with a balance being Fe and inevitable impurities.

A cast iron brake block was prepared by so-called internal chill by pouring a molten metal of the above-described alloy cast iron into a mold.

The resulting cast iron brake block was subjected to the above-described tests (1) to (4). The results are shown in Table 1.

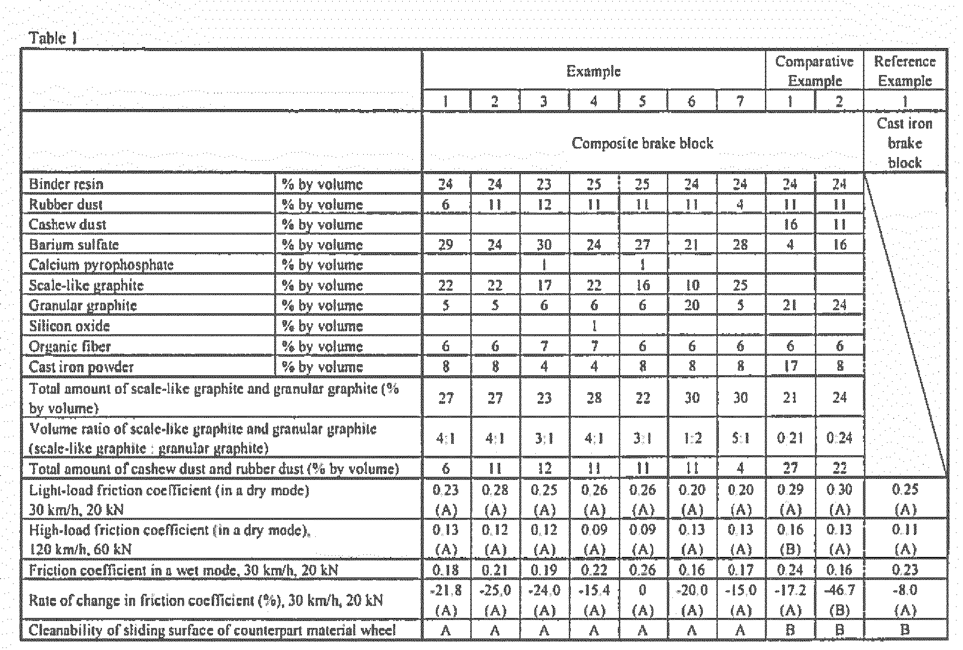

As is clear from the results shown in Table 1, the friction materials of Examples 1 to 7 are able to thoroughly ensure braking properties under dry or wet conditions. In addition, since the friction coefficient is decreased to the same level as in the cast iron-based friction material of Reference Example 1, the friction materials of Examples 1 to 7 may become a satisfactory replacement for a brake block including a cast iron-based friction material.

On the other hand, in Comparative Examples 1 and 2, the high-load friction coefficient and the rate of change in frictional coefficient fall outside the target values, and therefore, the friction materials of Comparative Examples 1 and 2 may not become a replacement for a brake block including a cast iron-based friction material. In addition, in the friction materials of Comparative Examples 1 and 2, a nonuniform transfer surface was formed on the counterpart material wheel.

### REFERENCE SIGNS LIST

- 1:: Brake block
- 2:: Back plate
- 3:: Friction material
- 4:: Mounting plate

## Claims

1. A brake block comprising a synthetic resin based friction material including a scale-like graphite and a granular graphite in an amount of 20 to 30% by volume in total.

2. The brake block according to claim 1, wherein a volume ratio of the scale-like graphite and the granular graphite (scale-like graphite : granular graphite) is 1:2 to 5:1.

3. The brake block according to claim 1 or 2, wherein the friction material includes at least one of a cashew dust and a rubber dust in an amount of 4 to 12% by volume.

4. The brake block according to any one of claims 1 to 3, wherein the brake block is a brake block for a railway vehicle.

5. A method for producing the brake block according to any one of claims 1 to 4, the method comprising:
a preforming step of subjecting a synthetic resin based frictional material composition including a scale-like graphite and a granular graphite in an amount of 20 to 30% by volume in total to pressure forming, thereby obtaining a preformed body, and
a heat compression forming step of putting the preformed body into a thermoforming mold, and overlaying a back plate thereon, followed by performing heat compression forming, thereby obtaining a brake block having a desired shape.

6. A wheel tread brake device for a railway vehicle, comprising the brake block according to any one of claims 1 to 4.

## Patentansprüche

1. Bremsklotz, umfassend ein Reibungs-Material auf Kunstharzbasis, das einen schuppenartigen Graphit sowie einen körnigen Graphit in einer Menge von insgesamt 20 bis 30 Vol.-% enthält.

2. Bremsklotz nach Anspruch 1, wobei ein Volumenverhältnis des schuppenartigen Graphits und des körnigen Graphits (schuppenartiger Graphit: körniger Graphit) 1:2 bis 5:1 beträgt.

3. Bremsklotz nach Anspruch 1 oder 2, wobei das Reibungs-Material einen Cashew-Staub oder/und einen Kautschuk-Staub in einer Menge von 4 bis 12 Vol.-% enthält.

4. Bremsklotz nach einem der Ansprüche 1 bis 3, wobei der Bremsklotz ein Bremsklotz für ein Schienenfahrzeug ist.

5. Verfahren zum Herstellen des Bremsklotzes nach einem der Ansprüche 1 bis 4, wobei das Verfahren umfasst:
einen Vorformungs-Schritt, in dem eine Reibungsmaterial-Zusammensetzung auf Kunstharzbasis, die einen schuppenartigen Graphit und einen körnigen Graphit in einer Menge von insgesamt 20 bis 30 Vol.-% enthält, Druckformen unterzogen wird und so ein vorgeformter Körper gewonnen wird, sowie
einen Wärme-Druckumformungs-Schritt, in dem der vorgeformte Körper in eine Form zum Thermoformen eingesetzt und eine Spannplatte aufgelegt wird, anschließend Wärme-Druckumformen durchgeführt wird und so ein Bremsklotz gewonnen wird, der eine gewünschte Form hat.

6. Klotzbremsen-Vorrichtung für ein Schienenfahrzeug, die den Bremsklotz nach einem der Ansprüche 1 bis 4 umfasst.

## Revendications

1. Bloc de frein comportant un matériau de friction à base de résine synthétique comprenant du graphite en écailles et du graphite granulaire à raison de 20 % à 30 % en volume au total.

2. Bloc de frein selon la revendication 1, dans lequel le ratio volumique du graphite en écailles et du graphite granulaire (graphite en écailles : graphite granulaire) est compris entre 1:2 et 5:1.

3. Bloc de frein selon la revendication 1 ou 2, dans lequel le matériau de friction comprend au moins une poussière parmi de la poussière d'anacarde et de la poussière de caoutchouc à raison de 4 % à 12 % en volume.

4. Bloc de frein selon l'une quelconque des revendications 1 à 3, dans lequel le bloc de frein est un bloc de frein pour véhicule ferroviaire.

5. Procédé de production du bloc de frein selon l'une quelconque des revendications 1 à 4, le procédé comprenant :
une étape de mise en œuvre consistant à soumettre une composition de matériau de friction sur base de résine synthétique comprenant du graphite en écailles et du graphite granulaire à raison de 20 % à 30 % en volume au total à un formage sous pression, de manière à obtenir ainsi un corps préformé, et
une étape de thermoformage sous pression consistant à mettre le corps préformé dans un moule de thermoformage, à poser sur celui-ci une plaque d'appui, puis à mettre en œuvre un thermoformage sous pression, de manière à obtenir ainsi un bloc de frein présentant une forme désirée.

6. Dispositif de frein de bandage pour véhicule ferroviaire, comprenant le bloc de frein selon l'une quelconque des revendications 1 à 4.
